Europäisches Patentamt

European Patent Office

Office européen des brevets

(11) Publication number: **0 253 925**
**A1**

## EUROPEAN PATENT APPLICATION

(21) Application number: 86201308.3

(22) Date of filing: 23.07.86

(51) Int. Cl.⁴: **B63B 21/00** , B63B 59/02 ,
E02B 3/22

(43) Date of publication of application:
27.01.88 Bulletin 88/04

(84) Designated Contracting States:
DE FR GB IT NL

(71) Applicant: **Bluewater Terminal Systems N.V.**
**Theaterstraat 17**
**Willemstad Curaçao Netherlands**
**Antilles(NL)**

(72) Inventor: **Van Heijst, Willem Jan**
**35, Chemin de la Fenette**
**Fribourg(CH)**

(74) Representative: **Timmers, Cornelis Herman**
**Johannes et al**
**EXTERPATENT Willem Witsenplein 4**
**NL-2596 BK 's-Gravenhage(NL)**

(54) **Mooring system.**

1. Mooring system with a tower-shaped structure (2, 40) floor carrying at its upper end a turntable (8) for mooring the vessel (14, 56) by means of a mooring hawser (26, 68), said towerstructure (2, 40) carrying below the waterline (6) a rigid fender (12, 46), the vessel (14, 56) carrying at its moored end (16, 58) at least one flexible tension member (18, 22, 60) of which the end remote from the vessel is connected to a ballast weight (20, 24, 64).

FIG:1a.

## Mooring system.

(57) The invention relates to a mooring system comprising a tower shaped structure, embedded in the seabed and carrying at its upper end a turntable for mooring the vessel thereon.

Various systems for mooring a ship through a tower structure are known and, for instance, described in the French patent 2 420 457. The mooring system described therein has the advantage of a high flexibility but it is very costly and its disconnection is nog simple. There are nevertheless many cases, for instance, when there is a danger of surface ice or in areas where typhons develop suddenly for this requirement. A simple nylon hawser system can be used providing disconnect at low cost. However, when using a mooring hawser the vessel can ride up to the tower. This can result in a dangerous situation, particularly when the tower is in fact a wellhead jacket and when the high-pressure wellheads terminate on the jacket itself. It is possible of course to provide the vessel with permanent propulsion to keep it away from the tower but this has far-reaching operational cost consequences.

The invention aims to overcome the above problems. According to the invention the tower structure carries below the waterline a rigid fender and the vessel carries its moored end at least one tension member of which the end remote from the vessel is connected to a ballast weight.

Preferred embodiments of the moored system according to the invention are described in the claims 2-5.

The measures according to the invention ensure that there is the necessary elasticity to avoid impact and that the vessel is pushed away elastically when fender and tension member(s) meet. The force with which the vessel is pushed away is proportional to the angle created by the tension member.

To avoid yawing movements of the vessel the hawser between the end of the vessel and the turntable is preferably short but in that case there is little mooring elasticity resulting into high mooring forces during adverse wheather conditions. According to the invention preferrably the vessel comprises at its moored end a frame with two upstanding arms of which the lower ends are connected to the vesseldeck pivoting around a horizontal axis essentially perpendicular to the vessel axis, the upper ends being interconnected and provided with means for connecting it to the mooring hawser between the turntable and a connecting point on the deck of the vessel, in such a way that the part of the mooring hawser between the turntable and the frame is shorter than the other part.

With this arragement a mooring system with adequate elasticity is obtained, whilst the distance between the fixation point on the vessel and the turntable is considerably reduced. The kinetic energy of the tanker whilst moving towards the jacket and the impact values are minimized, and necessary walkway arrangements between vessel and jacket are not only simplified but also reduced in length

It is observed that fender systems based upon the principle of generating a restoring force by using gravity are known in itself. The Dutch patent application 8302024, for instance, describes a mooring system in which one or more ballasted tension members hang on a stable mooring point, such as a quay or storage vessel, a ringshaped fender being fixed around each tension member to be contacted by the hull or the bow of the vessel to be moored. The Dutch patent application 8403519 describes a fender system in which a circular or horseshoe-shaped fender of consirable weight is used, hanging by a tension member from a fixed mooring point such as a mooring tower or a buoy. Both systems are cumbersome and, of course, to be effective require very heavy ballasting weights. This is particularly in the system according to the Dutch application 8403519 a considerable drawback. Furthermore they have the drawback that it is always the hull or bow of the vessel which comes into contact with the fender, while in the system according to the invention the vessel always remains free of the fender: there is only contact between the tension members hanging by the moored vessel and the fender.

The invention is elucidated on the hand of the drawings.

Figure 1a is a schematic side view of the mooring system according to the invention and a tanker, moored therto.

Figure 1b shows the same combination of tanker and mooring system now, however, in a position in which the tanker is closer to the tower.

Figure 2 is a view similar to figure 1a of another embodiment.

Figure 3 shows a perspective view of a third embodiment according to the invention.

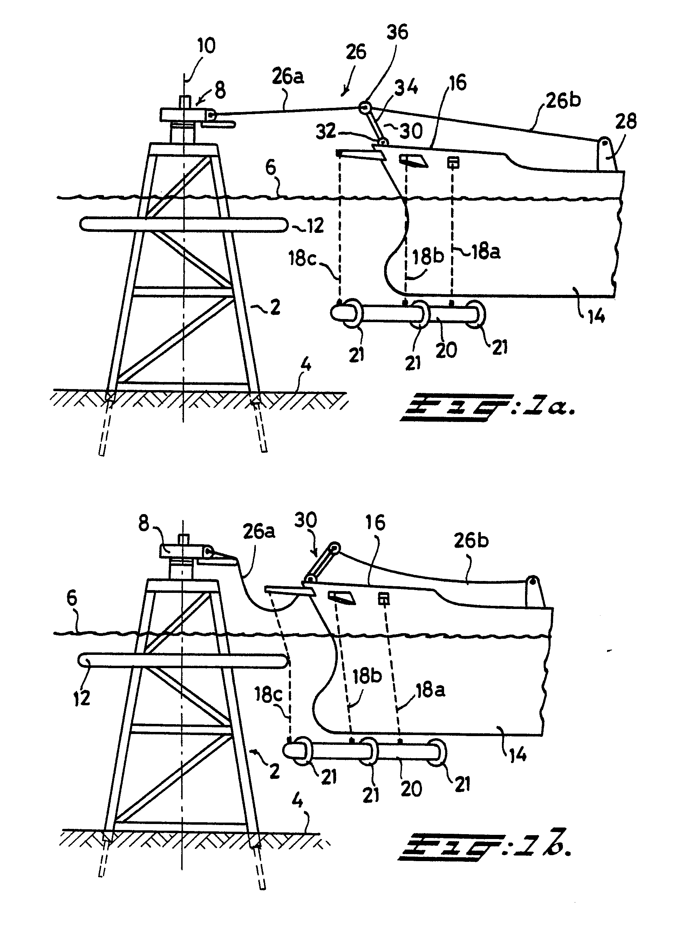

In figure 1a reference numeral 2 denotes a tower structure of which the legs are embedded firmly in the seafloor 4; the surface of the sea is indicated with reference numeral 6.

The tower 2 carries the turntable 8 which can rotate around the vertical axis 10 and furthermore the tower 2 carries according to the invention a rigid fender 12 below the surface 6 and rigidly connected to the tower 2.

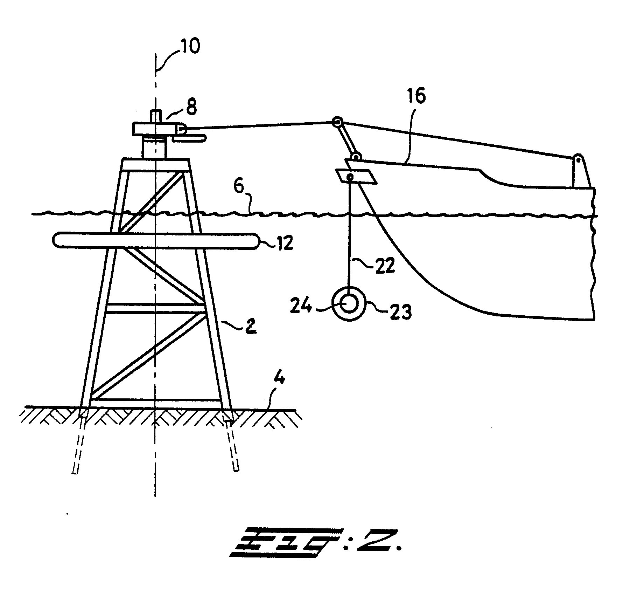

The vessel 14, for instance a tanker, is moored with its bow 16 to the tower 2. According to the invention the vessel 14 carries at its bow a number of tension members such as cables of which three are shown and indicated with reference numerals 18a, 18b and 18c; in fact there are five arranged around the bow 16. At the other end the tension members are connected to a ballasted structure 20, in the shown embodiment of a curved configuration and also surrounding the bow 18. It is observed that other embodiments are possible; the mooring system can comprise a lesser number of ballasted tension members, for instance two, one on each side of the most forward end of the bow and having their ends individually ballasted or interconnected by a single large ballasted bar. Such an embodiment is schematically shown in figure 2 in which the same parts are indicated with the same references as in figure 1a. The tension members are indicated with reference numeral 22 and the ballasting bar with reference numeral 24.

One of the main advantages of the mooring system according to the invention is that the vessel can be moored to the mooring system by means of a simple hawser which can quickly be disconnected when necessary. This hawser is preferrably short to counteract yawing movements of the tanker but the mooring must still have a certain elasticity. To this end the hawser, indicated as a whole with 26, is divided into two parts, 26a and 26b, the one end of part 26a being connected to a turntable 8 and the other end, the end of 26b, being connected to a fixing point 28 on the deck of the vessel. In between the parts are connected to a frame 30 on the bow of the vessel which can pivot around a horizontal axis 32 perpendicular to the axis of the vessel and consists of two upstanding arms 34, interconnected at their upper end by an arm 36 provided with means for connecting the hawser parts 26a and 26b thereto. The part 26a is much shorter than the part 26b so that the mooring system effectively prevents yawing motions of the tanker and also has the necessary elasticity.

Figure 1b shows what occurs when the tanker moves too close to the tower 2. The ballasted tension member 18c contacts the rigid fender 12 and the inclination of the tension member 18c results into a restoring force pushing the vessel away from the fender.

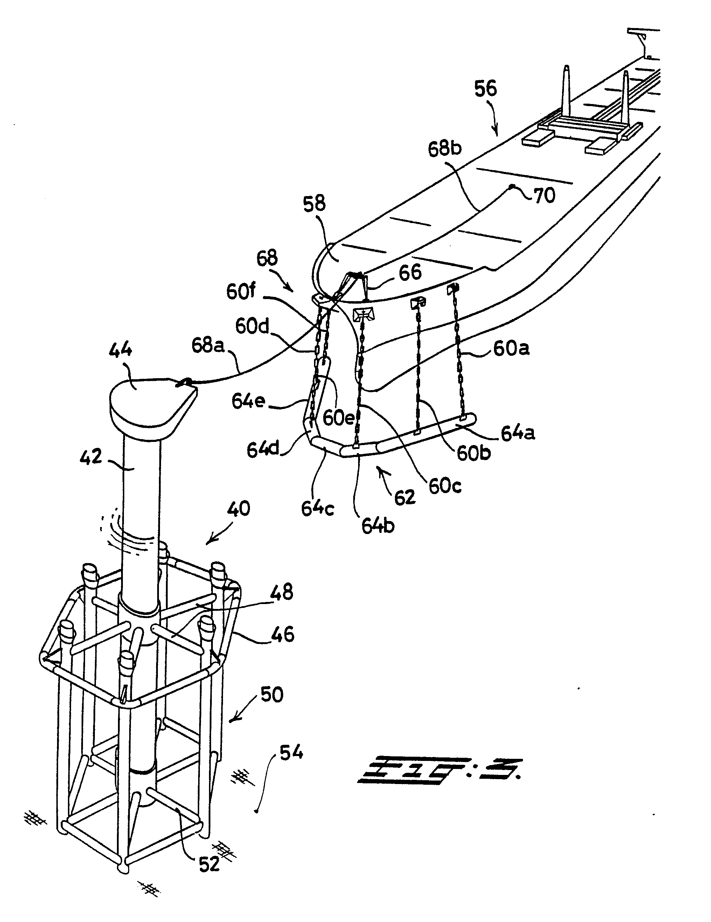

Figure 3 shows another embodiment which operates on the same principles. Here the tower structure 40 comprises a slender column 42 carrying the turntable 44 and surrounded by the fender 46 which is supported not only by the radial arms 48 but also by the uprights 50 which are anchored in the seabed and connected by the radial arms 52 to the column 42. The vessel 56 carries at its bow 58 a number of tension members such as cables 60a-60f of which the lower ends are interconnected to a polygonal ballast member 62 made up of individual pipe-sections 64a-64e, each filled with ballasting material, for instance.

The bow carries the frame 66 which can pivot around a horizontal axis perpendicular to the vessel's longitudinal axis, in the same way as explained with reagard to figure 1a and the vessel is moored by the hawser 68, comprising two parts 68a and 68b, the former being the shorter and the latter being the longer part. The end of the part 68b is firmly connected to the vesseldeck at 70.

The above described mooring system operates in the way as described above.

In order to limit swing movements of the pendulum weight during roll motions of the vessel in quartering seas, the weight can be fitted with vertical fin plates at the back of the fender to create a damping effect. They are indicated by reference numeral 21 in figures 1a and 1b, by reference numeral 23 in figure 2, but are not shown in figure 3.

## Claims

1. Mooring system comprising a tower-shaped structure (2, 40) embedded in the seafloor (4) and carrying at its upper end a turntable (8) for mooring the vessel (14, 56) thereon, by means of a mooring hawser (26, 68), <u>characterised</u> in that the tower-structure (2, 40) carries below the waterline (6) a rigid fender (12, 46) and the vessel (14, 56) carries at its moored end (16, 58) at least one flexible tension member (18, 22, 60) of which the end remote from the vessel is connected to a ballast weight (20, 24, 64).

2. Mooring system according to claim 1, <u>characterised</u> in that the rigid fender (12, 46) completely surrounds the tower structure (2, 40).

3. Mooring system according to claim 1 or 2, <u>characterised</u> in that the vessel (14, 56) carries a number of tension members (18, 60) surrounding the moored end (16, 56) thereof.

4. Mooring according to claim 3, <u>characterised</u> in that the ends of the tension members (60) remote from the vessel are connected to a curved or polygonal ballast member (62).

5. Mooring according to claim 4, <u>characterised</u> in that the ballast member (62) comprises a number of interconnected pipeshaped parts (64a, 64b, 64c, 64d and 64e) filled with ballasting material.

6. Mooring system according to claim 1-5, <u>characterised</u> in that the vessel (14, 56) carries at its moored end (16, 58) a frame (30, 66) with two upstanding arms (34) of which the lower ends are connected to the vesseldeck pivoting around a horizontal axis (32) essentially perpendicular to the vessel axis, the upper ends being interconnected (36) and provided with means for connecting it to the mooring hawser (26, 68) between the turntable (8, 44) and a connecting point (28, 70) on the deck of the vessel (14, 56).

7. Mooring system according to claims 1-6, <u>characterised</u> in that the weight (24) is filled with vertically directed plates to dempen swing motions.

_Fig: 1a._

_Fig: 1b._

_FIG:2._

FIG:3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | NL-A-8 302 024 (SINGLE BUOY MOORINGS) <br> * Whole document * | 1,3 | B 63 B 21/00 <br> B 63 B 59/02 <br> E 02 B 3/22 |
| A | EP-A-0 182 439 (SINGLE BUOY MOORINGS) <br> * * Abstract; figures 1-9 * & NL-A-8 403 519 (Cat. D) * | 2 | |
| A | EP-A-0 096 446 (SINGLE BUOY MOORINGS) <br> * Abstract; figure 1 * | | |
| A | US-A-2 915 879 (BESSE) | | |

TECHNICAL FIELDS SEARCHED (Int. Cl.4)

B 63 B
E 02 B

The present search report has been drawn up for all claims

| Place of search | Date of completion of the search | Examiner |
|---|---|---|
| THE HAGUE | 09-03-1987 | DE SCHEPPER H.P.H. |